# EUROPEAN PATENT APPLICATION

(11) **EP 2 752 332 A1**
(43) Date of publication of application: **09.07.2014**
(21) Application number: 11871663.8
(22) Date of filing: 29.08.2011
(51) Int. Cl.: B60N 2/44, B60N 2/06, B60N 2/42, B60R 22/26, B60R 22/46

(54) **SEAT STRUCTURE FOR VEHICLE**

(71) Applicant: TOYOTA JIDOSHA KABUSHIKI KAISHA, Toyota-shi, Aichi-ken, 471-8571 (JP)
(72) Inventor: FUKUZAWA, Masaki, Toyota-shi Aichi 471-8571 (JP)
(74) Representative: Intès, Didier Gérard André
(86) International application number: PCT/JP2011/069498
(87) International publication number: WO 2013/030938

(57) **Abstract**

To provide a vehicle seat structure in which, when a pretensioner operates, parts at a pretensioner side interfering with parts disposed at a side of a seat cushion is suppressed. A vehicle seat structure (10) has: a three-point seatbelt device (30) that is configured to restrain a passenger by a shoulder webbing (32A) and a lap webbing (32B); a lap outer side pretensioner (40) that is connected to a distal end side portion of the lap webbing (32B) at a vehicle transverse direction outer side with respect to a seat cushion (12), and that is fixed to an upper rail (22), and that, when a vehicle collision is detected or predicted, forcibly applied tension to the lap webbing (32B); and an outer shield (41) that covers, from a vehicle transverse direction outer side, the seat cushion (12) together with the lap outer pretensioner (40) and a portion of the lap webbing (32B) which portion includes a region connected to the lap outer pretensioner (40).

## Description

### Technical Field

The present invention relates to a vehicle seat structure.

### Background Art

Structures are known in which, in a three-point seatbelt device, a lap outer pretensioner that is fixed to a vehicle body is provided at an end portion of a lap webbing (see, for example, Japanese Patent Application Laid-Open (JP-A) No. 2007-91040, JP-A No. 2010-58703, and JP-A No. 2002-308045). Further, structures that fix a lap outer pretensioner to a seat are known (see, for example, JP-A No. 2009-298310 and JP-A No. 2010-95080).

### DISCLOSURE OF INVENTION

### Technical Problem

However, when a lap outer pretensioner is merely disposed at an outer side in the vehicle transverse direction of a seat cushion, there is the concern that, when the lap outer pretensioner operates, parts of the pretensioner will interfere with operation levers and the like that are disposed at the side portion of the seat cushion.

A subject of the present invention is to obtain a vehicle seat structure in which, at the time when a pretensioner operates, parts of the pretensioner are suppressed from interfering with parts disposed at the side of a seat cushion.

### Solution to Subject

A vehicle seat structure relating to a first aspect of the present invention comprises: a three-point seatbelt device that is configured to restrain, by a shoulder webbing, an upper body of a passenger seated on a seat cushion, and that is configured to restrain, by a lap webbing, a waist region of the passenger; a pretensioner that, at an outer side in a vehicle transverse direction with respect to the seat cushion, is connected to a portion of the lap webbing, which portion is at a side opposite the shoulder webbing side, and that is fixed to a strength member at the seat cushion side, and that, in a case in which a vehicle collision is detected or predicted, forcibly applies tension to the lap webbing; and an outer shield that covers, from the outer side in the vehicle transverse direction, the seat cushion together with the pretensioner and a portion of the lap webbing, which portion includes a region connected to the pretensioner.

In accordance with the above-described aspect, when the pretensioner operates, the connected region of the lap webbing to the pretensioner is pulled-in toward a pretensioner side, and tension is applied to this lap webbing. Here, the pretensioner and the connected region of the pretensioner and the lap webbing are covered by the outer shield from the vehicle transverse direction outer side with respect to the seat cushion. Therefore, parts such as operation levers and the like that are disposed at the side of the seat cushion so as to be able to be operated by a passenger, and the pretensioner and the connected region of the pretensioner and the lap webbing, are positioned at mutually opposite sides of the outer shield. Accordingly, these parts such as operation levers and the like that are disposed at the side of the seat cushion so as to be able to be operated by a passenger, and the pretensioner and the connected region of the pretensioner and the lap webbing, interfering with one another is suppressed.

In this way, in the vehicle seat structure of the above-described aspect, when the pretensioner operates, parts at the pretensioner side interfering with parts disposed at the side of the seat cushion is suppressed.

The above-described aspect may be structured such that an end portion of the lap webbing, at the side opposite the shoulder webbing side, is connected to the strength member of the seat cushion via an anchor, and the pretensioner is connected to a portion of the lap webbing, which portion is covered by the outer shield and is set apart, toward the shoulder webbing side, from a portion of the lap webbing connected with the strength member.

In accordance with the above-described aspect, the end portion of the lap webbing, which end portion is at the side opposite the shoulder webbing, is connected to the strength member via the anchor. The pretensioner is connected to the portion of the lap webbing, which portion is covered by the outer shield and is located further toward the shoulder webbing side from the portion of the lap webbing connected with the strength member, and, by operating, the pretensioner pulls the connected portion thereof in and applies tension to the lap webbing. In this structure, even if the tension of the lap webbing is not supported by the pretensioner after the pretensioner operates, the strength member can be made to support the tension of the lap webbing via the anchor.

The above-described aspect may be structured such that a ring member is provided at the portion of the lap webbing that is covered by the outer shield and is set apart, toward the shoulder webbing side, from the portion of the lap webbing connected with the strength member, and the pretensioner is structured to include a main body portion that is fixed to the strength member, a wire that is led out from the main body portion and, in a case in which a vehicle collision is detected or predicted, is pulled-in toward a main body portion side, and a hook member that is provided at a distal end of the wire and is hooked on the ring member.

In accordance with the above-described aspect, the lap webbing and the pretensioner are connected due to the hook member of the pretensioner being hooked on the ring member of the lap webbing. Due thereto, a structure that achieves the above-described respective effects can be obtained by a simple construction.

The above-described aspect may be structured such that a hooked position of the hook member on the ring member is set such that, in a state that is before operation of the pretensioner and in which tension is applied to the lap webbing, play arises between the ring member and the hook member or slack arises at the wire.

In accordance with the above-described aspect, in the usual state of usage of the three-point seatbelt device, the tension of the lap webbing is supported by the strength member via the anchor. Therefore, usually, tension is hardly applied at all to the wire of the pretensioner, and thus, the durability of the pretensioner (the vehicle seat structure overall) can be improved. Note that play between the ring member and the hook member, and slack of the wire, may both arise.

The above-described aspect may be structured such that the seat cushion includes upper rails that are supported so as to be slidable in a front-rear direction with respect to lower rails that are fixed to a vehicle body, and the anchor and the pretensioner are fastened and fixed by a common fastener to the upper rail that serves as the strength member.

In accordance with the above-described aspect, the anchor and the pretensioner are fixed to the upper rail that slides forward and rearward together with the seat cushion. Therefore, even if a seat position in the front-rear direction changes in accordance with the physique of the seated passenger or the like, the needed passenger restraining performances by the three-point seatbelt device and the pretensioner can be obtained.

The above-described aspect may be structured such that a ring member is provided at an end portion of the lap webbing which end portion is at a side opposite the shoulder webbing side, and the pretensioner is structured to include a main body portion that is fixed to the strength member, a wire that is led out from the main body portion and, in a case in which a vehicle collision is detected or predicted, is pulled into the main body portion, and a hook member that is provided at a distal end of the wire and is hooked on the ring member.

In accordance with the above-described aspect, the lap webbing and the pretensioner are connected due to the hook member of the pretensioner being hooked on the ring member of the lap webbing. Due thereto, a structure that exhibits the excellent effect that, at the time of operation of the pretensioner, parts at the three-point seatbelt device side interfering with parts disposed at the side of the seat cushion is suppressed, can be obtained by a simple structure.

The above-described aspect may be structured such that the seat cushion includes upper rails that are supported so as to be slidable in a front-rear direction with respect to lower rails that are fixed to a vehicle body, and the pretensioner is fastened and fixed by a fastener to the upper rail that serves as the strength member.

In accordance with the above-described aspect, the pretensioner is fixed to the upper rail that slides forward and rearward together with the seat cushion. Therefore, even if a seat position in the front-rear direction changes in accordance with the physique of the seated passenger or the like, the needed passenger restraining performances by the three-point seatbelt device and the pretensioner can be obtained.

The above-described aspect may be structured such that the fastener is structured to include a bolt that, in a fastened state, is in a posture of being inclined such that a vehicle transverse direction outer side of the bolt is positioned toward a vehicle upper side more than at a vehicle transverse direction inner side of the bolt.

In accordance with the above-described aspect, because the bolt is set in the above-described inclined posture, the fastening work by the fastener that includes the bolt is easily conducted through an opening portion.

The above-described aspect may be structured such that the outer shield is structured to have a shield main body, in which is formed an opening portion that exposes at least a region of the lap webbing connected with the pretensioner and a region of the lap webbing and the pretensioner fastened by the fastener, and a cover that closes the opening portion.

In accordance with the above-described aspect, the connecting of the lap webbing and the pretensioner, and the fastening work by the fastener, can be carried out through the opening portion of the shield main body. The operational effect is exhibited that, by closing the opening portion of the shield main body by the cover after this work, the parts at the three-point seatbelt device side interfering with the parts disposed at the side of the seat cushion at the time when the pretensioner operates is suppressed.

The above-described aspect may be structured such that the outer shield is structured to have a shield main body, in which is formed an opening portion that exposes at least the region of the lap webbing connected with the pretensioner, and a cover that closes the opening portion.

In accordance with the above-described aspect, the work of connecting the lap webbing and the pretensioner can be carried out through the opening portion of the shield main body. The operational effect is exhibited that, by closing the opening portion of the shield main body by the cover after this work, the parts at the three-point seatbelt device side interfering with the parts disposed at the side of the seat cushion at the time when the pretensioner operates is suppressed.

The above-described aspect may be structured such that the outer shield is structured to include an upper wall that covers, from a vehicle upper side, a space between the outer shield and the seat cushion, and, in the upper wall, there is formed a cut-out portion that introduces the lap webbing into the space and that restricts movement of the lap webbing in a vehicle front-rear direction.

In accordance with the above-described aspect, the end portion of the lap webbing is introduced, through the cut-out portion of the outer shield, in between the outer shield and the seat cushion. Because this cut-out portion restricts the position of the lap webbing in the vehicle front-rear direction, this contributes to an improvement in the applicability of the webbing by the passenger.

The above-described aspect may be structured such that a lower portion, in a vehicle vertical direction, of the outer shield protrudes out more toward outer side in a vehicle transverse direction than an upper portion of the outer shield, and the pretensioner is disposed at a lower portion of a space at an inner side in the vehicle transverse direction with respect to the outer shield.

In accordance with the above-described aspect, the pretensioner and the anchor and the like can be positioned at the vehicle transverse direction outer side. Therefore, the direction of tension of the lap webbing, at the vehicle transverse direction outer side of the seat cushion, can be inclined greatly with respect to the vertical direction. Due thereto, at the time when the pretensioner operates, the lap webbing can be pulled-in smoothly. Advantageous Effects of Invention

As described above, in accordance with the vehicle seat structure relating to the present invention, there is the excellent effect that, at the time when a pretensioner operates, the parts at the pretensioner side interfering with parts disposed at the side of a seat cushion is suppressed.

### BRIEF DESCRIPTION OF DRAWINGS

Fig. 1 is a cross-sectional view showing, in an enlarged manner, main portions of a vehicle seat structure relating to a first embodiment of the present invention;
Fig. 2 is a cross-sectional view showing a state after operation of a lap outer pretensioner in the vehicle seat structure relating to the first embodiment of the present invention;
Fig. 3 is a perspective view showing, with a portion thereof exploded, the schematic overall structure of the vehicle seat structure relating to the first embodiment of the present invention;
Fig. 4 is a perspective view showing a hooking structure of a ring member and a hook member that structure the vehicle seat structure relating to the first embodiment of the present invention;
Fig. 5A is a cross-sectional view schematically showing a state before a lap webbing is connected to a vehicle body, among processes of assembling the vehicle seat structure relating to the first embodiment of the present invention;
Fig. 5B is a cross-sectional view schematically showing a connected state of the lap webbing to the vehicle body, among the processes of assembling the vehicle seat structure relating to the first embodiment of the present invention;
Fig. 5C is a cross-sectional view schematically showing a connected state of the lap webbing and the lap outer pretensioner, among the processes of assembling the vehicle seat structure relating to the first embodiment of the present invention;
Fig. 6 is a cross-sectional view corresponding to Fig. 1 and showing, in an enlarged manner, main portions of a vehicle seat structure relating to a second embodiment of the present invention; and
Fig. 7 is a cross-sectional view corresponding to Fig. 2 and showing a state after operation of the lap outer pretensioner in the vehicle seat structure relating to the second embodiment of the present invention.

### BEST MODES FOR CARRYING OUT THE INVENTION

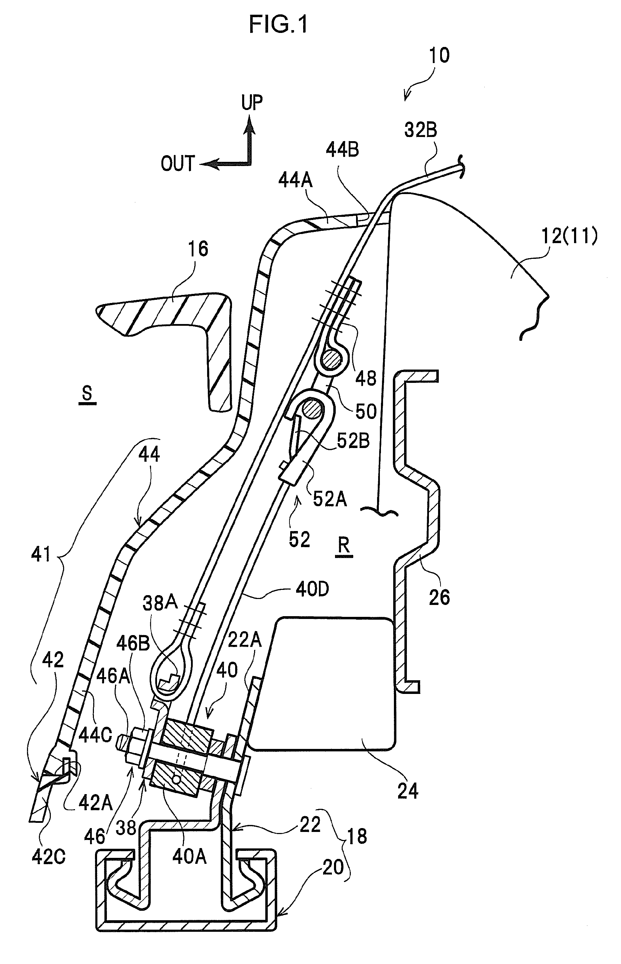

A vehicle seat structure 10 relating to a first embodiment of the present invention is described on the basis of Fig. 1 through Fig. 5. First, the schematic overall structure of the vehicle seat structure 10 is described, and next, the assembly structure of a lap outer pretensioner 40 that is a main portion of the present invention is described in detail. Note that arrow FR, arrow UP and arrow OUT that are shown appropriately in the drawings respectively indicate the forward direction of an automobile to which the vehicle seat structure 10 is applied, the upward direction, and the outer side in a vehicle transverse direction that substantially coincides with a seat transverse direction.

### (Overall Structure of Vehicle Seat Structure)

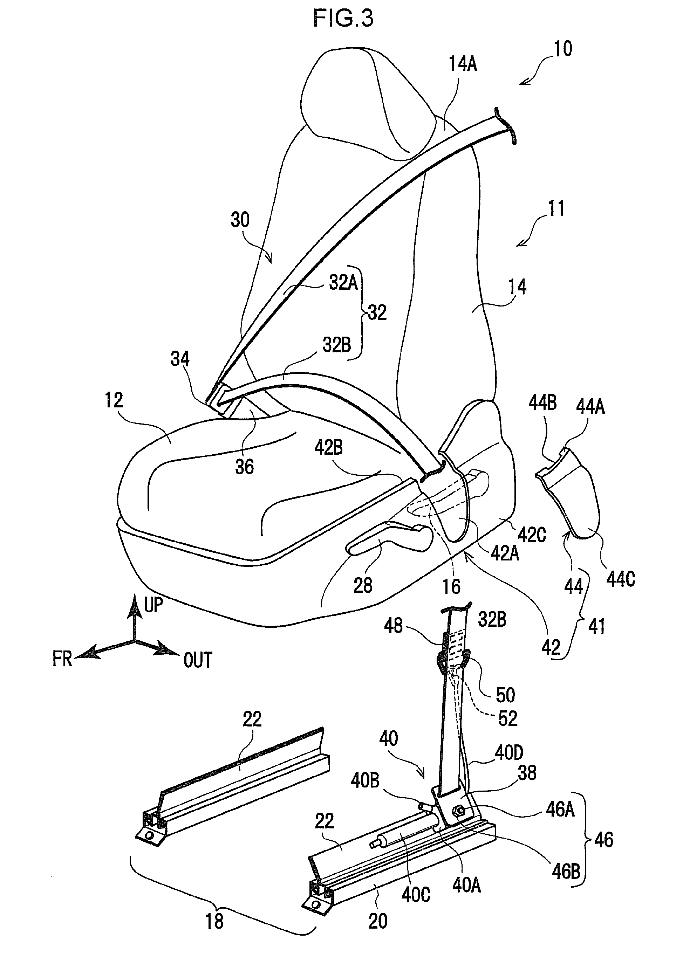

The schematic overall structure of the vehicle seat structure 10 is shown in Fig. 3 in a perspective view, a portion of which is exploded. As shown in this drawing, the vehicle seat structure 10 has a vehicle seat 11. The vehicle seat 11 is structured to have a seat cushion 12 for a passenger to sit on, and a seat back 14 that is connected to the rear end of this seat cushion 12 and is for supporting the upper body of the seated passenger from the vehicle rear side. The seat back 14 is connected to the rear end of this seat cushion 12 via an unillustrated recliner such that the angle of inclination thereof with respect to the seat cushion 12 can be adjusted.

A reclining lever 16 for cancelling the locked state of the recliner is disposed at the side portion at the outer side in the vehicle transverse direction with respect to the seat cushion 12 (an outer shield 41 that is described later). The reclining lever 16 is supported at the seat back 14 such that the rear end side thereof can swing around an axis that runs along the vehicle transverse direction, and, due to the front end side being pulled-up, the reclining lever 16 cancels the locked state of the recliner. This is a structure in which, in the state that locking of the recliner has been cancelled by the reclining lever 16, the seat back 14 can be tilted rearward due to the passenger applying his/her body weight to the seat back 14, or the seat back 14 can be tilted forward due to the urging force of a return spring.

Further, the front-rear position, with respect to the vehicle body, of the vehicle seat 11 can be adjusted. Concretely, as shown in Fig. 1 and Fig. 3, the vehicle seat 11 has a slider 18. The slider 18 is structured with the main portions thereof being a pair of left and right lower rails 20 that are fixed to the vehicle body floor, and a pair of left and right upper rails 22 that are fixed to the seat cushion 12 via a seat lifter 24 that is described later. The respective upper rails 22 are structured to be slidable forward and rearward with respect to the corresponding lower rail 20, and are held at an arbitrary position in the front-rear direction with respect to the lower rails 20 by an unillustrated stopper mechanism.

Moreover, the vertical position (seat surface height), with respect to the vehicle body, of the vehicle seat 11 can be adjusted. Concretely, as shown in Fig. 1, the seat lifter 24 that is a seat surface height adjusting mechanism is interposed between the upper rail 22 and a seat cushion frame 26 that structures the seat cushion 12. Although not illustrated, the seat lifter 24 is structured by, for example, the upper rails 22 and the seat cushion frame 26 being connected by a pair of front and rear links, so as to structure a four link mechanism in which the upper rails 22 are the fixed links. This is a structure in which the seat surface height of the seat cushion 12 is adjusted in accordance with the angles of inclination of this pair of front and rear links.

A lift lever 28, that is for adjusting the seat surface height by the seat lifter 24, is disposed at the side portion at the outer side in the vehicle transverse direction with respect to the seat cushion 12 (the outer shield 41 that is described later). The lift lever 28 is supported at the seat cushion 12 such that the rear end side thereof can swing around an axis that runs along the vehicle transverse direction, and is structured so as to posture at a neutral position that is substantially horizontal, an upper limit position at which the front end side is pulled-up from the neutral position, and a lower limit position at which the front end side is pulled-down from the neutral position. Due to the lift lever 28 being swung reciprocally between the neutral position and the upper limit position, the seat surface height of the seat cushion 12 rises, and, due to the lift lever 28 being swung reciprocally between the neutral position and the lower limit position, the seat surface height of the seat cushion 12 falls. Namely, the seat lifter 24 and the lift lever 28 include unillustrated mechanisms and structure a so-called pump-type seat lifter.

A three-point seatbelt device 30 is integrated with the above-described vehicle seat 11. The three-point seatbelt device 30 has a webbing 32. One end side of the webbing 32 is taken-up by an unillustrated retractor so as to be able to be pulled out. For example, the retractor may be fixed to the vehicle body such as a pillar lower portion or the like, or may be incorporated within the seat back 14. In either case, the retractor is disposed so as to take-up the webbing 32 through the vicinity of a shoulder portion 14A at the vehicle transverse direction outer side of the seat back 14.

The other end of the webbing 32 is fixed, via an anchor plate 38, to the vehicle transverse direction outer side and lower side portion with respect to the seat cushion 12. This fixing structure is described later. A tongue plate 34 is provided slidably at the intermediate portion of the webbing 32. At the three-point seatbelt device 30, the webbing 32 is applied to the passenger by the tongue plate 34 being anchored in a buckle 36 that is provided at the vehicle transverse direction inner side with respect to the seat cushion 12.

In this applied state, the portion of the webbing 32 from the retractor (the shoulder portion 14A of the seat back 14) to the tongue plate 34 is a shoulder webbing 32A that restrains the upper body of the passenger. On the other hand, the portion of the webbing 32 from the tongue plate 34 to the anchor plate 38 is a lap webbing 32B that restrains the waist region of the passenger.

Moreover, the vehicle seat 11 has the lap outer pretensioner 40 that is disposed at the vehicle transverse direction outer side of the seat cushion 12 and serves as a pretensioner that pulls-in the lap webbing 32B side of the webbing 32 in predetermined cases. The lap outer pretensioner 40 has a base portion 40A that is fixed to the seat cushion 12 side. A gas generator 40B that generates a large amount gas by operating is fixed to the base portion 40A. Further, a cylinder 40C, that is for moving an unillustrated piston forward by the gas generated by the gas generator 40B, is fixed to the front side of the base portion 40A. Moreover, the lap outer pretensioner 40 has a wire 40D whose one end is fixed to the piston within the cylinder 40C and whose other end is led out to the exterior through the rear portion of the base portion 40A.

The lap outer pretensioner 40 as described above is structured such that, when the gas generator 40B is operated, the wire 40D is pulled-in through the base portion 40A and into the cylinder 40C. As will be described later, this wire 40D is connected to the end portion of the lap webbing 32 which end portion is at the side opposite the shoulder webbing 32A side. Due thereto, tension is forcibly applied to the lap webbing 32B due to operation of the lap outer pretensioner 40.

The vehicle seat structure 10 has an unillustrated ECU that controls the operation of the lap outer pretensioner 40. This ECU is electrically connected to the gas generator 40B. Further, the ECU is electrically connected to a front collision sensor that detects or predicts a front collision of the automobile to which the vehicle seat structure 10 is applied. The ECU operates the gas generator 40B, i.e., the lap outer pretensioner 40, under the condition that a front collision has been detected or predicted on the basis of a signal from this front collision sensor.

### (Assembly Structure of Lap Outer Pretensioner)

The vehicle seat structure 10 that is described above has the outer shield 41 that covers the side portion of the seat cushion 12 from an outer side in the vehicle transverse direction. As shown in Fig. 1, the outer shield 41 covers the lap outer pretensioner 40 and the end portion of the lap webbing 32B at the lap outer pretensioner 40 side, from the vehicle transverse direction outer side. On the other hand, the outer shield 41 causes the reclining lever 16 and the lift lever 28 to be positioned outer side thereof in the vehicle transverse direction, so that the reclining lever 16 and the lift lever 28 can be operated from the vehicle transverse direction outer side.

An opening portion 42A, that is for exposing the lap outer pretensioner 40 and the connected region of this lap outer pretensioner 40 and the lap webbing 32B, is formed in a shield main body 42 that structures this outer shield 41. As shown in Fig. 3 as well, the opening portion 42A has a substantially "U"-shaped edge portion that opens upward, and the opening portion 42A reaches to an upper wall 42B of the shield main body 42. In this embodiment, the lower end of the opening portion 42A reaches a vicinity of the lower end of the shield main body 42.

Further, the outer shield 41 has a cover 44 that is mounted to the shield main body 42 and closes the opening portion 42A. In this embodiment, the cover 42 is mounted to the shield main body 42 by a fit-together structure. The cover 44 is formed so as to substantially cover the lap outer pretensioner 40 and the majority of end portion of the lap webbing 32B located at the lap outer pretensioner 40 side from the vehicle transverse direction outer side. An upper wall 44A, that covers the portion of the opening portion 42A that is formed at the upper wall 42B, is formed at the upper end of the cover 44. A groove (cut-out) 44B that opens inwardly in the vehicle transverse direction is formed in the upper wall 44A.

The lap webbing 32B is, through this cut-out portion 44B, introduced into a space R between the outer shield 41 and the seat cushion 12. Further, the cover 44 is structured such that displacement of the lap webbing 32B in the front-rear direction is restricted at the front and rear edge portions of the cut-out portion 44. Note that the open end of the cut-out portion 44B, that faces inwardly in the vehicle transverse direction, may be closed by the side surface of the seat cushion 12, or may be closed by an uncut portion at the upper wall 42B of the shield main body 42.

Moreover, as shown in Fig. 1 and Fig. 3, respective lower portions 42C, 44C of the shield main body 42 and the cover 44 protrude-out further toward the vehicle transverse direction outer side than the upper portions thereof. Concretely, the anchor plate 38 is disposed such that the portion of the webbing 32B, which portion is from the region that contacts the vehicle transverse direction outer end of the seat cushion 12 to the anchor plate 38, is in an inclined posture at which the lower side is positioned further toward the vehicle transverse direction outer side than the upper side. The anchor plate 38 that is disposed in this way is covered, from the vehicle transverse direction outer side, by the shield main body 42 and the cover 44 that protrude out toward the vehicle transverse direction outer side as described above.

The lap outer pretensioner 40 is fixed, at the base portion 40A thereof, to the upper rail 22 (the upper rail 22 at the vehicle transverse direction outer side, and the same holds hereinafter) that serves as a strength member of the seat cushion 12. Similarly, the anchor plate 38 is fixed to the upper rail 22 that serves as the strength member of the seat cushion 12. Further, the lap outer pretensioner 40 and the anchor plate 38 are fastened together by a common fastener 46. Concretely, an upper portion 22A of the upper rail 22, the base portion 40A of the lap outer pretensioner 40, and the anchor plate 38 are nipped-in between and fastened by the head portion of a bolt 46A that passes through these and a nut 46B that is screwed-together with this bolt 46A. In this embodiment, the anchor plate 38 is adjacent, at the vehicle transverse direction outer side, to the base portion 40A of the lap outer pretensioner 40.

Further, at the vehicle seat structure 10, the bolt 46A of the fastener 46 is inclined with respect to a horizontal plane such that, in front view, the vehicle transverse direction outer side portion thereof is positioned further upward than the inner side portion thereof. Therefore, the upper portion 22A of the upper rail 22 is bent so as to be inclined inwardly in the vehicle transverse direction, and the lap outer pretensioner 40 and the anchor plate 38 also are maintained in postures of being inclined inwardly in the vehicle transverse direction. Further, in this embodiment, the nut 46B is screwed-together with the bolt 46A from the vehicle transverse direction outer side.

In this fastened state, the end portion of the lap webbing 32B is connected to a webbing connecting portion 38A that is formed at the upper end side of the anchor plate 38. The webbing connecting portion 3 8A is the peripheral edge portion of a through-hole. Due to a portion of the lap webbing 32B, which portion is inserted-through this through-hole, being folded-over and sewn, the lap webbing 32B is connected to the anchor plate 38 so as to not fall out therefrom.

Further, a ring member 50 is provided via a sub webbing 48 at a portion of the lap webbing 32B, which portion is positioned at the upper portion of the space between the outer shield 41 and the seat cushion 12. The ring member 50 is formed in a substantially trapezoidal frame shape, and the sub webbing 48 is trained around the long side of the ring member 50. The sub webbing 48 is made into a folded-over shape in which the region thereof that is trained around the ring member 50 is the lower end, and the both sides, which are overlapped in the thickness direction above this trained-around region, are fixed by sewing to the lap webbing 32B. The sub webbing 48 is disposed such that the entirety thereof, including the sewn region, is covered by the outer shield 41.

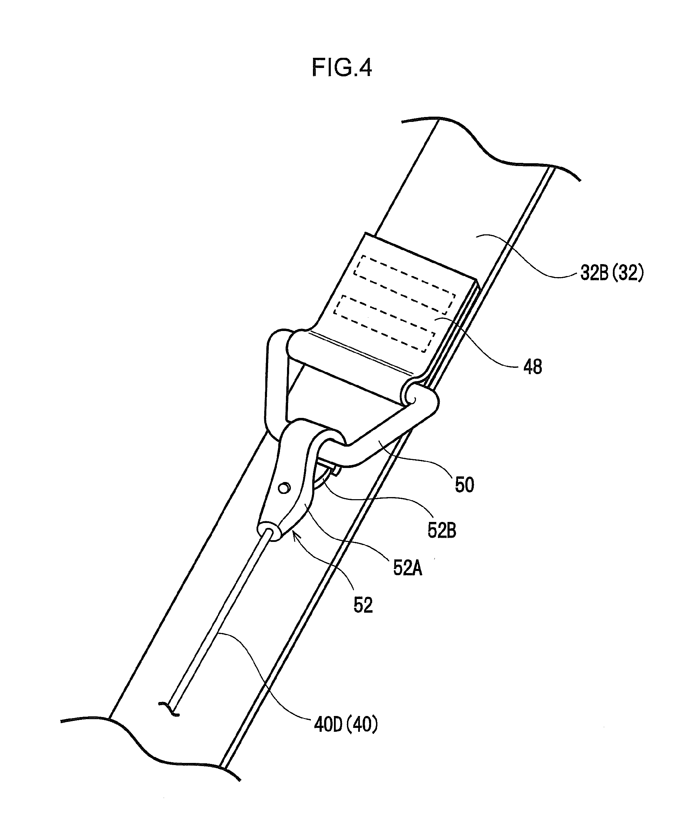

As shown in Fig. 4, the ring member 50 is supported so as to hang down at the lap webbing 32B via the sub webbing 48, in a posture in which the long side thereof, around which the sub webbing 48 is trained, is positioned as the upper end of the ring member 50. A hook member 52, that is provided at the distal end of the wire 40D and that structures the lap outer pretensioner 40, is hooked on the short side that is the lower end side of this ring member 50. In the state in which a hook main body 52A of the hook member 52 is hooked on the ring member 50, due to the open side of the hook main body 52A being closed by a disconnection preventing portion 52B, the hook member 52 is hooked on the ring member 50 so as to be unable to fall-off therefrom. At times of attaching and removing the hook member 52 with respect to the ring member 50, it suffices to open the open side of the hook main body 52A by displacing the disconnection preventing portion 52B toward the inner side of the hook main body 52A against urging force in the direction of closing the open side of the hook main body 52A.

Due to the take-up force of an unillustrated retractor, slight tension is applied to the respective portions of the webbing 32 including the lap webbing 32B. The placement of the ring member 50 is set such that, in this state, a slight amount of slack arises at the wire 40D or there is play (a gap) between the ring member 50 and the hook member 52. Namely, in the vehicle seat structure 10, tension of the retractor is applied to the portion of the webbing 32 which portion is between the region where the ring member 50 is set and the region (the distal end) that is connected to the anchor plate 38, and, usually, tension is not applied to the wire 40D. Note that play between the ring member 50 and the hook member 52 and slack of the wire 40D may both arise.

### (Processes of Assembling Vehicle Seat Structure)

Processes of assembling the vehicle seat structure 10 that has the above-described structure are described. Here, as an example, processes of assembling a structure in which the retractor is fixed to the vehicle body are described.

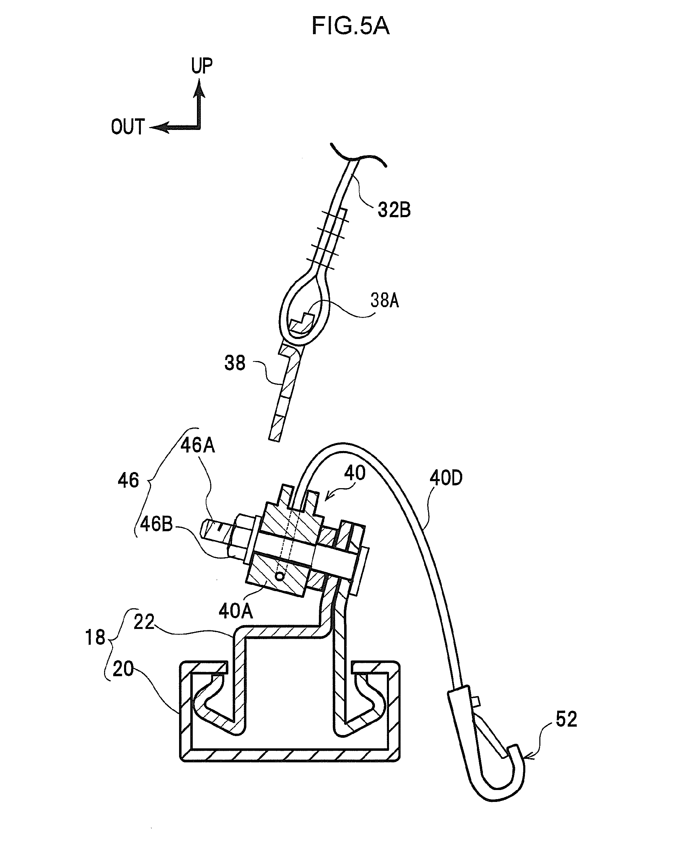

The vehicle seat 11 is assembled to a vehicle body with the slider 18 (the lower rails 20 and the upper rails 22), the seat lifter 24, the lap outer pretensioner 40, the outer shield 41, the reclining lever 16 and the lift lever 28 being an integral assembly. Accordingly, in the state in which the webbing 32 is not connected to the vehicle seat 11 side as shown in Fig. 5A, the assembly of the vehicle seat 11 is fixed to the vehicle body at the lower rails 20 of the slider 18. In this state, the lap outer pretensioner 40 is in a state of being temporarily fixed with respect to the upper rail 22.

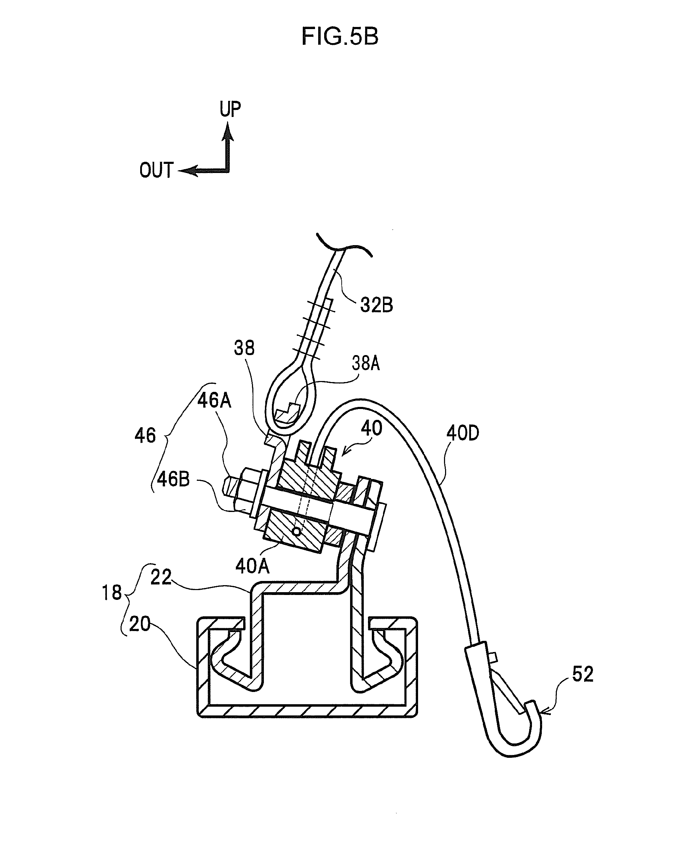

Next, the cover 44 is removed from the shield main body 42, and the opening portion 42A is exposed. Then, the distal end side of the lap webbing 32B is, through the opening portion 42A of the shield main body 42, introduced into the space R, and, as shown in Fig. 5B, the anchor plate 38 that is connected to the distal end of the webbing 32 is fixed to the upper rail 22. Concretely, assembling is made through the opening portion 42A of the shield main body 42 such that the nut 46B of the fastener 46, that is temporarily fixing the lap outer pretensioner 40, is removed and the bolt 46A is inserted-through the anchor plate 38, and thereafter, the nut 46B is screwed-together with this bolt 46A. Due thereto, the lap outer pretensioner 40 and the anchor plate 38 are fastened and fixed to the upper rail 22 by the fastener 46.

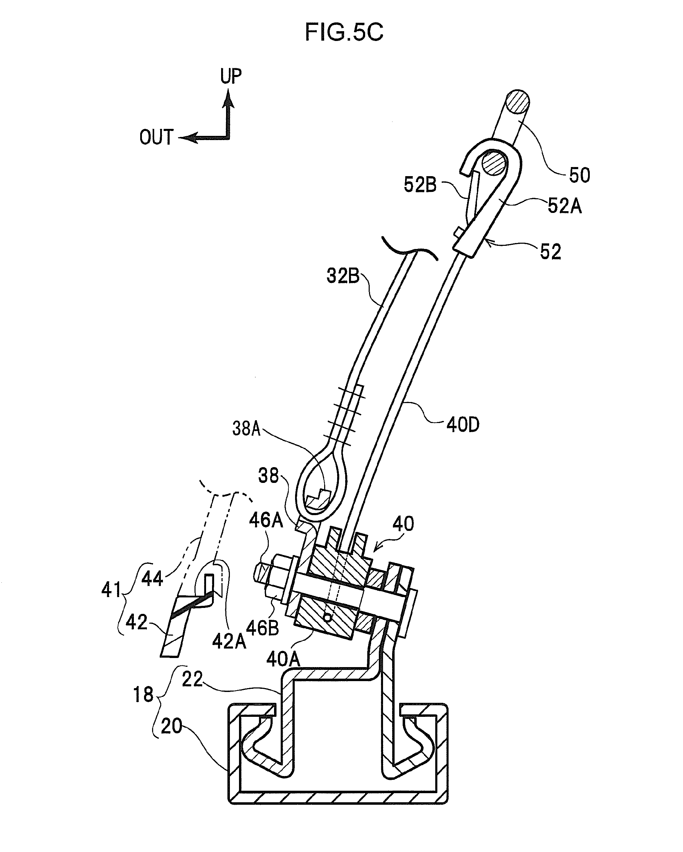

Next, as shown in Fig. 5C, the assembling is continued through the opening portion 42A of the shield main body 42 such that the hook member 52 that is provided at the distal end of the wire 40D is hooked on the ring member 50. Then, the cover 44 is mounted to the shield main body 42, and the opening portion 42A of this shield main body 42 is closed.

Operation of the first embodiment is described next.

In the vehicle seat structure 10 of the above-described structure, when a front collision of the automobile to which the vehicle seat structure 10 is applied is detected or predicted from a signal from the front collision sensor, the ECU operates the gas generator 40B of the lap outer pretensioner 40. Thereupon, due to the unillustrated piston advancing within the cylinder 40C due to the pressure of the gas generated by the gas generator 40B, the wire 40D is pulled into the base portion 40A and the cylinder 40C.

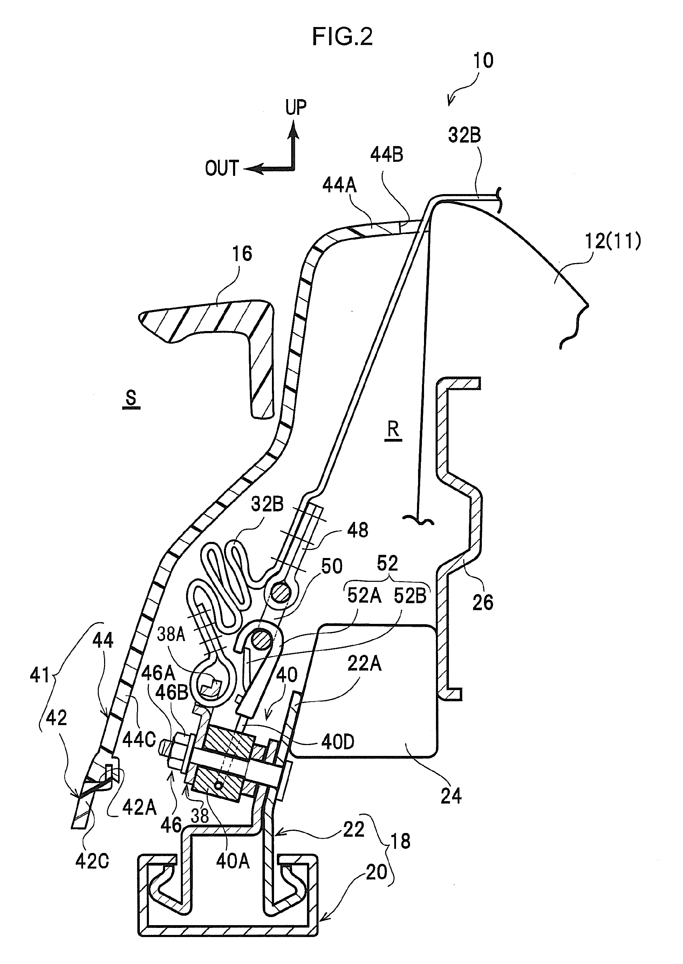

Due thereto, the end portion of the lap webbing 32B, which end portion is at the side in the vehicle transverse direction opposite the buckle 36 side, is pulled downward as shown in Fig. 2 via the ring member 50 and the sub webbing 48. Namely, tension is forcibly applied to the lap webbing 32B. Therefore, the restraining force to the passenger by the lap webbing 32B increases, and the passenger is suitably protected with respect to a front collision.

Here, in the vehicle seat structure 10, the space R, in which is disposed the connected region of the lap outer pretensioner 40 and the wire 40D with the lap webbing 32B, is covered by the outer shield 41 from the vehicle transverse direction outer side. Due thereto, a space S at the exterior of the seat, that is the space occupied by the reclining lever 16 and the lift lever 28 and is the space in which the reclining lever 16 and the lift lever 28 can be moved (operated), and the above-described space R are separated by the outer shield 41. Therefore, accompanying the operation of the lap outer pretensioner 40, the parts at the pretensioner side, such as the lap webbing 32B, the ring member 50, the hook member 52, the wire 40D and the like, interfering with the reclining lever 16 and the like is prevented by the outer shield 41.

In this way, in the vehicle seat structure 10 relating to the first embodiment, at the time of operation of the lap outer pretensioner 40, the parts at the lap outer pretensioner 40 side interfering with the reclining lever 16 that is disposed at the side of the seat cushion 12 is suppressed. Therefore, at the time of a front collision, the waist region of the passenger can be restrained efficiently by the lap outer pretensioner 40. Further, the connected region of the lap outer pretensioner 40 and the wire 40D with the lap webbing 32B, that is covered from the vehicle transverse direction outer side by the outer shield 41, is not exposed to the exterior. Therefore, the appearance from the side of the vehicle seat structure 10 is good, and moreover, the operability of the reclining lever 16 and the lift lever 28 is excellent.

Further, the distal end of the lap webbing 32B is fixed to the upper rail 22 via the anchor plate 38 that serves as an anchor, and the wire 40D is connected to a portion of the webbing 32 which portion is apart from the anchor plate 38. Due thereto, even in a case in which the tension of the lap webbing 32B is not supported by the lap outer pretensioner 40 after operation, the upper rail 22 can be made to support the tension of the lap webbing 32B via the anchor plate 38.

Moreover, the distal end of the lap webbing 32B is fixed to the upper rail 22 via the anchor plate 38. Therefore, before operation of the lap outer pretensioner 40, i.e., at usual times of the three-point seatbelt device 30 (both at times when the webbing 32 is applied and is not applied), the tension of the lap webbing 32B is supported by the upper rail 22 via the anchor plate 38. On the other hand, the region of hooking of the hook member 52 and the ring member 50 is determined such that, usually, play arises between the both or slack arises at the wire 40D. Therefore, because tension is hardly applied at all to the wire 40D usually, the durability of the lap outer pretensioner 40 (the overall vehicle seat structure 10) can be improved.

Still further, the anchor plate 38 and the lap outer pretensioner 40 are fixed to the upper rail 22 that slides forward and rearward together with the seat cushion 12 (the vehicle seat 11). Therefore, even if the front-rear position of the vehicle seat 11 is changed in accordance with the physique of the passenger or the like, the needed passenger restraining performance by the three-point seatbelt device 30 and the lap outer pretensioner 40 can be obtained.

Further, the lap webbing 32B and the lap outer pretensioner 40 are connected due to the hook member 52 being hooked on the ring member 50 that is provided at the lap webbing 32B. Therefore, the vehicle seat structure 10 that achieves the above-described respective effects can be constructed by a simple structure. Further, the webbing 32 of the three-point seatbelt device 30 can be connected to the lap outer pretensioner 40 after the vehicle seat 11, in which the lap outer pretensioner 40 has been made into an assembly, is assembled to the vehicle body. Due thereto, good assembly workability of the vehicle seat structure 10 overall is obtained.

Moreover, the bolt 46A, that fastens the lap outer pretensioner 40 and the anchor plate 38 together, is set in an inclined posture with the vehicle transverse direction outer side thereof being positioned further toward the upper side than the inner side. Therefore, the fastening workability of the lap outer pretensioner 40 and the anchor plate 38 by the fastener 46 that is passed through the opening portion improves, as compared with a fastening structure by a bolt that extends in the vehicle transverse direction. In particular, work space from the vehicle body outer side can be ensured even in a structure in which the height by which a rocker (side sill), that forms the lower edge of the door opening portion, projects from the floor surface is large. Further, by ensuring work space from the vehicle body outer side, the slider 18 can be set at a low position within the vehicle cabin. Due thereto, the wire 40D of the lap outer pretensioner 40 can be set to be long in the vertical direction, and the pull-in stroke of the lap webbing 32B by this wire 40D can be made to be long.

Further, by employing the bolt 46A that is in the above-described inclined posture, the plane of fastening of the lap outer pretensioner 40 is provided as an inclined plane. Further, the anchor plate 38 is disposed further toward the vehicle transverse direction outer side than the vehicle transverse direction end portion of the seat cushion 12. For these reasons, the direction in which the lap webbing 32B is pulled-in by the wire 40D of the lap outer pretensioner 40 is inclined with respect to the vertical direction such that the lower side is positioned further toward the outer side in the vehicle transverse direction than the upper side. Therefore, as compared with a structure in which the lap webbing 32B is provided along the vertical direction, the pull-in resistance of the lap webbing 32B is small, and tension can be applied to the lap webbing 32B efficiently at the time of a front collision. Namely, employing a fastening structure that uses the bolt 46A that is set in the above-described inclined posture contributes to an improvement in the passenger restraining performance at the time of a front collision. Further, this structure also contributes to lengthening the pull-in stroke of the lap webbing 32B by the wire 40D.

Moreover, the anchor plate 38 and the lap outer pretensioner 40 that are arranged in this way are covered from the vehicle transverse direction outer side by the respective lower portions 42C, 44C of the shield main body 42 and the cover 44. Further, the work of fastening by the above-described fastener 46, and the work of connecting the wire 40D and the lap webbing 32B by the hook member 52, can be carried out through the opening portion 42A that is formed in the shield main body 42. Further, this opening portion 42A is closed by the cover 44 after completion of the above-described respective works. Therefore, the above-described respective effects, such as suppressing interference with the reclining lever 16 and the like at the time of operation of the lap outer pretensioner 40, improving the appearance from the side of the vehicle seat structure 10, improving the operability of the reclining lever 16, and the like, can be obtained.

Still further, the position of the lap webbing 32B in the front-rear direction is restricted by the front and rear edge portions of the cut-out portion 44B that is formed in the upper wall 44A of the cover 44. Therefore, in the state in which the webbing 32 is not applied, the front-rear position of the tongue plate 34 through which the webbing 32 has been inserted can be restricted. Namely, applying the webbing 32 by the passenger can be made to be easy by setting the cut-out portion 44B at a position at which the passenger easily grasp the tongue plate 34.

### (Second Embodiment)

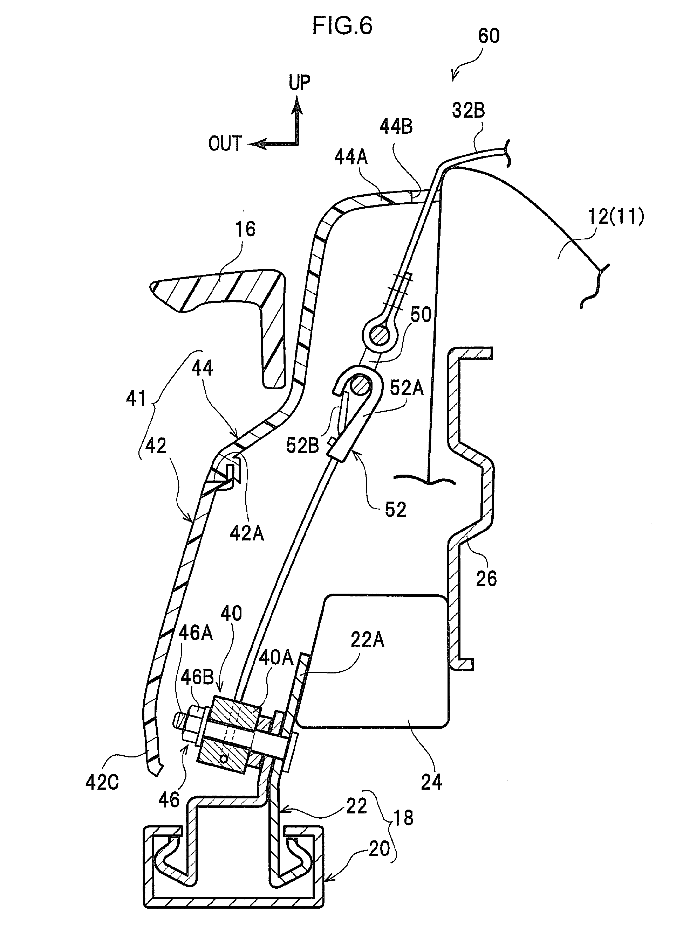

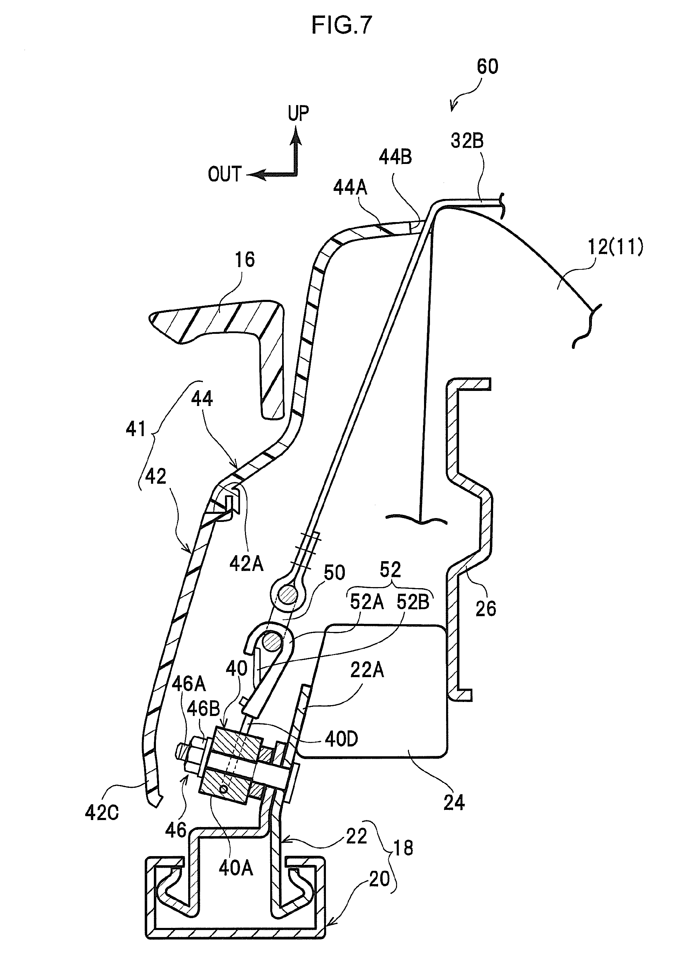

Main portions of a vehicle seat structure 60 relating to a second embodiment of the present invention are described next on the basis of Fig. 6 and Fig. 7. Note that parts/portions that are basically the same as the first embodiment are denoted by the same reference numerals as in the first embodiment, and there are cases in which description and illustration thereof are omitted.

As shown in Fig. 6, the lap webbing 32B that structures the vehicle seat structure 60 is not connected directly to the upper rail 22, and the wire 40D is connected to the distal end of the lap webbing 32B. Concretely, the ring member 50 is connected to the distal end of the lap webbing 32B. In this embodiment, the ring member 50 is connected to the distal end of the lap webbing 32B due to both sides of the portion of the webbing 32, which portion is trained around the long side of the ring member 50, being overlapped and sewn.

Moreover, the hook member 52 is hooked on the ring member 50. Accordingly, the vehicle seat structure 60 is structured such that the lap outer pretensioner 40 functions also as the anchor that supports the tension of the lap webbing 32B. Namely, at the vehicle seat structure 60, the tension that is caused at least by the take-up force of the retractor is always applied to the wire 40D. Further, when the lap outer pretensioner 40 operates, as shown in Fig. 7, the distal end of the lap webbing 32B is pulled-in directly, and tension is applied to the lap webbing 32B.

### (Processes of Assembling Vehicle Seat Structure)

Processes of assembling the vehicle seat structure 60 that has the above-described structure are described. Here, as an example, processes of assembling a structure in which the retractor is fixed to the vehicle body are described.

The vehicle seat 11 is assembled to a vehicle body with the slider 18 (the lower rails 20 and the upper rails 22), the seat lifter 24, the lap outer pretensioner 40, the outer shield 41, the reclining lever 16 and the lift lever 28 being an integral assembly. Accordingly, it is not illustrated, in a state in which the webbing 32 is not connected to the vehicle seat 11 side, the assembly of the vehicle seat 11 is fixed to the vehicle body at the lower rails 20 of the slider 18.

Next, the cover 44 is removed from the shield main body 42, and the opening portion 42A is exposed. Then, assembling is performed through the opening portion 42A of the shield main body 42 such that the distal end side of the lap webbing 32B is introduced into the space R, and the hook member 52 is hooked on the ring member 50 that is connected to the distal end of the webbing 32. Then, the cover 44 is mounted to the shield main body 42, and the opening portion 42A of this shield main body 42 is closed.

As described above, in the vehicle seat structure 60, work of fastening by the fastener 46 is not conducted after the fixing of the vehicle seat 11 to the vehicle body. Therefore, it suffices for the opening portion 42A at the vehicle seat structure 60 to be a size such that the work for hooking the hook member 52 on the ring member 50 can be carried out within the space R. Due thereto, the opening portion 42A and the cover 44 at the vehicle seat structure 60 are formed to be smaller in the vertical direction than the opening portion 42A and the cover 44 at the vehicle seat structure 10. Portions, other than those described above, of the vehicle seat structure 60, including portions that are not illustrated, are structured similarly to the corresponding portions of the vehicle seat structure 10.

Accordingly, the vehicle seat structure 60 can obtain similar effects by operation that is similar to that of the vehicle seat structure 10, except for the operation and effects that are due to the inclined posture of the bolt 46A and the operation and effects that are due to the structure in which the distal end of the lap webbing 32B is connected to the upper rail 22.

Further, the lap outer pretensioner 40 is fixed to the upper rail 22 that slides forward and rearward together with the seat cushion 12 (the vehicle seat 11), and the distal end of the lap webbing 32B is connected to this lap outer pretensioner 40. Therefore, even if the front-rear position of the vehicle seat 11 changes in accordance with the physique of the passenger or the like, the needed passenger restraining performance by the three-point seatbelt device 30 and the lap outer pretensioner 40 can be obtained.

Moreover, in the vehicle seat structure 60, the lap webbing 32B and the lap outer pretensioner 40 are connected due to the hook member 52 being hooked on the ring member 50 that is provided at the distal end of the lap webbing 32B. Therefore, the vehicle seat structure 60 that achieves the above-described respective effects can be structured by a simple construction. Moreover, because tension is always applied to the wire 40D, the stroke for eliminating play of the wire 40D at the time of operation of the lap outer pretensioner 40 becomes small (becomes unnecessary). Therefore, in comparison with the vehicle seat structure 10, tension can be applied to the lap webbing 32B in a short time from the operation of the lap outer pretensioner 40, and further, the pull-in stroke can be lengthened.

Still further, there is no need for the work of fastening, by the fastener 46, the distal end of the lap webbing 32B to the upper rail 22 as described above. Therefore, the opening portion 42A and the cover 44 can be made to be small.

Note that the above-described respective embodiments illustrate examples in which the retractor that structures the three-point seatbelt device 30 is disposed at the vehicle body side. However, the present invention is not limited to this, and may be structured such that, for example, the retractor is incorporated in the seat back 14 or the like. In this case, the vehicle seat 11 can be assembled to the vehicle body as the vehicle seat structure 10, 60 that is an assembly including the three-point seatbelt device 30. In this case, the work for connecting the lap outer pretensioner 40 and the lap webbing 32B after assembly to the vehicle body, and the work for fastening the anchor plate 38 to the upper rail 22, are not needed, and the opening portion 42A and the cover 44 can be eliminated.

Further, the above-described respective embodiments illustrate examples in which the parts for which interference with the lap outer pretensioner 40 is suppressed are the reclining lever 16 and the like, but the present invention is not limited to this. For example, the present invention may be applied in order to suppress interference, with the lap outer pretensioner 40, of a multi-function lever that has both the function of canceling locking of reclining and the function of operating the lifter, or an electric operation switch for seat adjustment, or the like.

In addition, it goes without saying that the present invention can be implemented by being modified in various ways within a scope that does not deviate from the gist thereof.

## Claims

1. A vehicle seat structure comprising:
a three-point seatbelt device that is configured to restrain, by a shoulder webbing, an upper body of a passenger seated on a seat cushion, and that is configured to restrain, by a lap webbing, a waist region of the passenger;
a pretensioner that, at an outer side in a vehicle transverse direction with respect to the seat cushion, is connected to a portion of the lap webbing, which portion is at a side opposite the shoulder webbing side, and that is fixed to a strength member at the seat cushion side, and that, in a case in which a vehicle collision is detected or predicted, forcibly applies tension to the lap webbing; and
an outer shield that covers, from the outer side in the vehicle transverse direction, the seat cushion together with the pretensioner and a portion of the lap webbing, which portion includes a region connected to the pretensioner.

2. The vehicle seat structure of Claim 1, wherein:
an end portion of the lap webbing, at the side opposite the shoulder webbing side, is connected to the strength member of the seat cushion via an anchor, and
the pretensioner is connected to a portion of the lap webbing, which portion is covered by the outer shield and is set apart, toward the shoulder webbing side, from a portion of the lap webbing connected with the strength member.

3. The vehicle seat structure of Claim 2, wherein:
a ring member is provided at the portion of the lap webbing that is covered by the outer shield and is set apart, toward the shoulder webbing side, from the portion of the lap webbing connected with the strength member, and
the pretensioner is structured to include a main body portion that is fixed to the strength member, a wire that is led out from the main body portion and, in a case in which a vehicle collision is detected or predicted, is pulled-in toward a main body portion side, and a hook member that is provided at a distal end of the wire and is hooked on the ring member.

4. The vehicle seat structure of Claim 3, wherein a hooked position of the hook member on the ring member is set such that, in a state that is before operation of the pretensioner and in which tension is applied to the lap webbing, play arises between the ring member and the hook member or slack arises at the wire.

5. The vehicle seat structure of any one of Claim 2 through Claim 4, wherein:
the seat cushion includes upper rails that are supported so as to be slidable in a front-rear direction with respect to lower rails that are fixed to a vehicle body, and
the anchor and the pretensioner are fastened and fixed by a common fastener to the upper rail that serves as the strength member.

6. The vehicle seat structure of Claim 1, wherein:
a ring member is provided at an end portion of the lap webbing which end portion is at a side opposite the shoulder webbing side, and
the pretensioner is structured to include a main body portion that is fixed to the strength member, a wire that is led out from the main body portion and, in a case in which a vehicle collision is detected or predicted, is pulled into the main body portion, and a hook member that is provided at a distal end of the wire and is hooked on the ring member.

7. The vehicle seat structure of Claim 6, wherein:
the seat cushion includes upper rails that are supported so as to be slidable in a front-rear direction with respect to lower rails that are fixed to a vehicle body, and
the pretensioner is fastened and fixed by a fastener to the upper rail that serves as the strength member.

8. The vehicle seat structure of Claim 5 or Claim 7, wherein the fastener is structured to include a bolt that, in a fastened state, is in a posture of being inclined such that a vehicle transverse direction outer side of the bolt is positioned toward a vehicle upper side more than a vehicle transverse direction inner side of the bolt.

9. The vehicle seat structure of Claim 5 or Claim 8 that depends from Claim 5, wherein the outer shield is structured to have a shield main body, in which is formed an opening portion that exposes at least a region of the lap webbing connected with the pretensioner and a region of the lap webbing and the pretensioner fastened by the fastener, and a cover that closes the opening portion.

10. The vehicle seat structure of any one of Claim 1 through Claim 8, wherein the outer shield is structured to have a shield main body, in which is formed an opening portion that exposes at least a region of the lap webbing connected with the pretensioner, and a cover that closes the opening portion.

11. The vehicle seat structure of any one of Claim 1 through Claim 10, wherein:
the outer shield is structured to include an upper wall that covers, from a vehicle upper side, a space between the outer shield and the seat cushion, and
in the upper wall, there is formed a cut-out portion that introduces the lap webbing into the space and that restricts movement of the lap webbing in a vehicle front-rear direction.

12. The vehicle seat structure of any one of Claim 1 through Claim 11, wherein:
a lower portion, in a vehicle vertical direction, of the outer shield protrudes out more toward a vehicle transverse direction outer side than an upper portion of the outer shield, and
the pretensioner is disposed at a lower portion of a space at a vehicle transverse direction inner side with respect to the outer shield.
